# EUROPÄISCHE PATENTSCHRIFT

(11) **EP 0 427 154 B1**
(45) Veröffentlichungstag und Bekanntmachung des Hinweises auf die Patenterteilung: **20.07.1994**
(21) Anmeldenummer: 90121075.7
(22) Anmeldetag: 03.11.1990
(51) Int. Cl.: A01B 29/04, A01B 29/06, A01B 49/04

(54) **Bodenbearbeitungsgerät**
Soil-tilling implement
Machine pour le travail du sol

(30) Priorität: 07.11.1989 DE 8913171 U
(43) Veröffentlichungstag der Anmeldung: 15.05.1991
(73) Patentinhaber: Rabewerk GmbH + Co., 49152 Bad Essen (DE)
(72) Erfinder: Warnking, Richard, Dipl.-Ing., W-4515 Bad Essen (DE)
(74) Vertreter: Missling, Arne, Dipl.-Ing.

(56) Entgegenhaltungen:
- EP-A- 0 191 871
- EP-A- 0 305 600
- DE-A- 2 528 930
- DE-B- 1 052 141
- DE-U- 8 710 527
- US-A- 4 519 460

## Beschreibung

Die Erfindung bezieht sich auf ein Bodenbearbeitungsgerät mit einer Walze, welche am Umfang mehrere vorstehende, voneinander beabstandete Ringelemente aufweist, wobei die Walze einzelne, solche Ringelemente bildenden Räder oder Scheiben umfaßt und die Räder oder Scheiben mittels separater Lagerarme einzeln oder in Gruppen höhenbeweglich gelagert und einzeln gefedert sind. Solch eine Maschine ist aus der DE-A-25 28 930 bekannt.

Aus dem Stand der Technik ist bekannt, zur Saatbeetbereitung den Boden mittels eine üblicherweise zapfwellenbetriebenen Bodenbearbeitungsmaschine aufzubereiten, beispielsweise mittels einer Kreiselegge. Um diesen Boden nachfolgend zur Saat mit einer Sämaschine zu bearbeiten, ist es erforderlich, vor dem Sävorgang den Boden einzuebnen und/oder in bestimmtem Maße zu verdichten. Es hat sich dabei herausgestellt, daß die Bodenverdichtung streifenförmig erfolgen kann, um Bodenrinnen auszubilden, in welche das Saatgut eingelegt werden kann. Eine derartige Bestellmaschine zur Bodenbearbeitung ist aus der EP-B1-191 871 bekannt. Dabei weist die Bestellmaschine eine Walze auf, an deren im wesentlichen zylindrischem Umfang einzelne in Form von Ringwülsten ausgebildete Ringelemente vorhanden sind.

Diese verdichten den Boden stärker, als die übrigen Bereiche der Walze, so daß in diese verdichteten Streifen oder Rinnen mittels Säscharen die Saat eingebracht werden kann. Als nachteilig erweist es sich bei diesem Gerät, daß der Anpreßdruck der Walze von den jeweiligen Bodenbedingungen bzw. von der Beaufschlagung der Walze abhängt, so daß sich bei unterschiedlichen Böden sehr unterschiedliche Verdichtungszonen ergeben können. Diese Nachteile werden insbesondere dadurch erwirkt, daß die Walze nicht weiter abgestützt ist, sondern mit ihrem gesamten Gewicht auf dem Erdboden aufliegt. Ihre starre Ausführung führt zu örtlichen hohen Bodenverdichtungen.

Die DE-A-25 28 930 beschreibt eine landwirtschaftliche Maschine, bei welcher eine Bodendruckwalze vorgesehen ist, welche mit einzelnen Ringen ausgestattet ist, um ähnlich dem aus der EP-B1-191 871 bekannten Gerät verdichteten Bodenstreifen oder Furchen auszubilden, in welche das Saatgut eingebracht wird. Die Gleichmäßigkeit der Bodenverdichtung ist nun erheblich verbessert, aber die bearbeitete Bodenfläche ist uneben, weil die Verdichtungskraft der Räder gleich ist.

Der Erfindung liegt die Aufgabe zugrunde, ein Bodenbearbeitungsgerät der eingangs genannten Art zu schaffen, welches bei einfachem Aufbau und einfacher, betriebssicherer Wirkungsweise die Vorbereitung von verdichteten Bodenstreifen zur Einbringung von Saatgut ermöglicht.

Erfindungsgemäß wird die Aufgabe durch die Merkmale des Hauptanspruches gelöst, die Unteransprüche zeigen weitere vorteilhafte Ausgestaltungen der Erfindung.

Das erfindungsgemäße Bodenbearbeitungsgerät zeichnet sich durch eine Reihe erheblicher Vorteile aus. Da zum einen die streifenförmige Verdichtung des Bodens mittels einer Walze erfolgt, ist eine gleichmäßige und reproduzierbare Bodenbearbeitung sichergestellt. Die Verwendung einer Walze weist den weiteren Vorteil auf, daß diese einfach und kostengünstig herstellbar ist und ein hohes Maß an Verschleißwiderstand aufweist. Die Walze kann in einfacher Weise gelagert werden, wobei insbesondere eine sichere Höhenverstellung der Walze gewährleistet werden kann, um die Verdichtung des Bodens einstellbar zu machen.

In einer besonders günstigen Weiterbildung der Erfindung ist vorgesehen, daß der Walze ein höhenveränderbares Stützelement zugeordnet ist, um eine Einstellung der Walze und damit eine Einstellung der Bodenverdichtung vornehmen zu können.

Damit bei einem Auftreffen der Walze auf Bodenhindernisse, beispielsweise Steine, eine Beschädigung der Walze ausgeschlossen ist, ist diese gegenüber dem Stützelement abgefedert gelagert.

Durch die Ausbildung der Walze mit einzelnen Rädern oder Scheiben ist es möglich, daß die zungenförmigen Ansätze des Stützelements, welche sich zwischen die einzelnen Räder oder Scheiben erstrecken, diese in Form eines Abstreifers umgreifen können. Es wird somit ein Teil der Räder oder Scheiben, bevorzugterweise der obere Teil, vollständig gegenüber dem Erdboden abgeschirmt, um die Walze sauber und verschmutzungsfrei zu halten.

Es ist möglich, andere Reinigungsmittel vorzusehen, um die Walze von anhaftendem Erdreich zu befreien. So können beispielsweise Bürsten oder ähnliches vorgesehen sein. Weiterhin kann es auch vorteilhaft sein, zusätzlich Elemente zur Reinigung des Stützelementes, der Planierplatte oder anderer Teile des Gerätes einzubauen.

Es ist auch möglich, die Räder oder Scheiben in Fahrtrichtung zueinander versetzt anzuordnen, um zum einen die Montage bzw. Demontage der Räder zu erleichtern und um zum anderen die Lagerung der Räder günstiger ausgestalten zu können. Die Versetzung der einzelnen Scheiben oder Räder der Walze bewirkt weiterhin in vorteilhafter Weise, daß die Walze bei der Arbeit sauber bleibt. Durch die Versetzung benachbarter Scheiben oder Räder wird verhindert, daß sich Erdbrocken zwischen zwei benachbarten Scheiben festsetzen, da die Relativbewegungen zwischen den benachbarten Scheiben die Erdbrocken zerkleinert und aus dem Zwischenraum ausfördert. Somit erhöhen sich die Reinigungseigenschaften der Walze.

Die Räder der Walzen können elastisch, verformbar ausgebildet sein, beispielsweise in Form von Schlappreifen oder Niederdruckreifen. Es ist jedoch auch möglich, die Räder mit einem Reifen zu versehen, welcher einen zentrischen mittigen Steg umfaßt, an dessen Außenbereich seitlich abstehende Lappen oder Ringwülste angeordnet sind.

Um ein Ausweichen der Räder beim Auftreffen auf Bodenhindernissen zu erleichtern und um die Montage und Demontage weiter zu vereinfachen, sind die Räder mittels separater Lagerarme gelagert. Als Alternative dazu können die Räder oder Scheiben auch in kleinen Gruppen zusammengefaßt sein.

In einer besonders günstigen Ausgestaltung der Erfindung ist vorgesehen, daß das Bodenbearbeitungsgerät mit einer Sämaschine zusammengebaut ist, welche beispielsweise mittels eines Dreipunkt-Anbaubocks an dem Bodenbearbeitungsgerät ankoppelbar ist und hinter diesem angeordnet ist. Dabei kann beispielsweise ein Oberlenkeranschluß der Sämaschine über einen Zwischenlenker mit dem Anschlußbock verbunden sein, während untere Lenker eines Anschlußgestänges an den Außenseiten des Vorgeräts und des Querbalkens gelagert sind. Die Sämaschine kann mit Säscharen versehen werden, welche hinter dem Bodenbearbeitungsgerät bzw. dessen Walze münden, wobei die Säschare entweder in die durch das Bodenbearbeitungsgerät erzeugten Bodenrillen oder in die zwischen Rillen aufgeworfenen Dämme münden. Die Enden der Saatrohre können unmittelbar über der Sohle der Rille münden, so daß das Saatgut in die Bodenrille gestreut wird. Es ist auch möglich, daß Säschare in die Sohle der Bodenrillen eindringen. In Abhängigkeit von der Bodenbeschaffenheit und der Art des Saatgutes kann die eine oder die andere Ausbildungsform günstiger sein, etwa hinsichtlich des Wasserhaushalts des Bodens, beispielsweise um zu vermeiden, daß das Saatgut durch starken Regen abgeschwemmt wird oder in nicht erwünschter Weise durch sich in den Bodenrillen sammelndes Wasser beeinträchtigt wird.

Zustreicher, Druckrollen oder Striegel können an den Ansätzen des Stützelementes angebracht sein. Die Ausläufer der Saatrohre können mit den Enden der Zungen des Stützelements verbunden sein. Dabei sind die Säschare zweckmäßigerweise noch abgefedert, wobei die Abfederung durch verstellbare Anschläge begrenzt werden kann, welche an den Zungen angebracht sind.

Um eine Einstellung der Sämaschine zu erleichtern, kann vorgesehen sein, daß diese gegenüber dem Bodenbearbeitungsgerät höhenverstellbar ist, so, daß auch ein Ausweichen des Bodenbearbeitungsgerätes bzw. Walze oder des Stützelementes beim Auftreffen auf Hindernisse ermöglicht wird.

Das Vorgerät kann mittels einer zentralen Tiefenverstellung verstellbar sein, welche beispielsweise in Form eines diagonal angeordneten Hydraulikkolbens ausgestaltet sein kann, der zur Aushebung des Bodenbearbeitungsgeräts gegenüber dem Vorgerät eingesetzt werden kann.

Es ist es vorteilhaft, wenn das Bodenbearbeitungsgerät gegenüber dem Vorgerät mittels eines Hydraulikzylinders angehoben werden kann. Dieser Hydraulikzylinder sollte unabhängig von der zentralen Tiefeneinstellbarkeit des Gerätes ausgebildet sein, welche ebenfalls in Form eines Hydraulikzylinders ausgeführt sein kann. Alternativ dazu ist es jedoch auch möglich, mittels eines einzigen Zylinders sowohl die Tiefeneinstellung als auch die Anhebung zu realisieren.

In Weiterbildungen der Erfindung ist vorgesehen, daß zusätzlich eine Düngeeinrichtung anbaubar ist, durch welche in die Bodenrillen zusätzlich zu dem Saatgut Dünger eingebracht werden kann oder eine Düngeeinrichtung statt einer Säeinrichtung eingesetzt werden kann. Die Sämaschine und die Düngeeinrichtung können einander derartig zugeordnet sein, daß die Sämaschine das Saatgut in die Rillen einbringt, der Dünger aber in die dazwischen befindlichen Dämme eingelegt wird. Die Düngereinbringungselemente können somit im Bereich zwischen zwei Saatrillen vorgesehen sein. Zusätzlich ist es möglich, an diesen Düngereinbringungselementen Saatrillenschließer anzuordnen, welche die benachbarten Saatrillen zustreichen oder zudrücken.

Um weiterhin eine ausreichende Belastung der Bodenwalze sicherzustellen, kann diese mit einer Gewichtsbelastung und/ oder einer Rütteleinrichtung versehen sein.

Wenn die Sämaschine des erfindungsgemäßen Bodenbearbeitungsgerätes mit Saatgut gefüllt ist, kann es, in Abhängigkeit von der Bodenbeschaffenheit, insbesondere bei weniger tragfähigen leichteren Böden dazu kommen, daß die Belastung auf die Walze und das ggf. Stützelement die erwünschten Grenzwerte überschreitet. Für weniger tragfähige Böden können somit bevorzugterweise zusätzliche Abstützeinrichtungen vorgesehen sein, welche in Form einer Walze ausgebildet sein können, die beispielsweise hinter den Saatrohren angeordnet ist. Es ist auch möglich, ein oder mehrere zusätzliche Stützräder, bevorzugterweise hinter den Saatrohren zu lagern.

Diese zusätzliche Walze kann dann diejenige Walze bilden, mit der ein zapfwellengetriebenes Bodenbearbeitungsgerät üblicherweise gekoppelt ist. Es ergibt sich dann die Möglichkeit, dieses Bodenbearbeitungsgerät, insbesondere wenn es einen Teil einer Säeinrichtung bildet, gegenüber der Bodenwalze derart abzufedern, daß das Bodenbearbeitungsgerät immer mit einer gleichmäßigen Belastung auf dem Boden ruht, unabhängig davon, ob die Sämaschine gefüllt oder leer ist. Die Belastung der Walze ist dann unabhängig von den anderen Gewichten der einzelnen Aggregate. Die Abfederung ist einstellbar ausgebildet, damit die nach den vorliegenden Bodenverhältnissen der speziell auf die Saatrillen ausgeübte Druck ausgewählt werden kann. Die Sämaschine ist somit auf dem zapfwellengetriebenen Vorgerät aufgebaut, nicht jedoch auf der Säwalze. Weiterhin kann es besonders günstig sein, wenn die Sämaschine von der zusätzlichen Stützwalze abgestützt wird. Dadurch kann die Belastung der Säwalze unabhängig von dem Gewicht von der mehr oder weniger gefüllten Sämaschine gehalten werden.

Es ist möglich, das vordere Bodenbearbeitungsgerät so auszubilden, daß dieses den Acker nur in Streifen vor den einzelnen Walzenelementen bearbeitet. Die Bearbeitungswerkzeuge können beispielsweise Frässcheiben sein, die nur unwesentlich breiter den Boden bearbeiten, als die Breite der Saatrillen. Es ist somit möglich, das erfindungsgemäße Bodenbearbeitungsgerät an ein sogenanntes Direkt-Saat-Verfahren anzupassen, bei welchem der Ackerboden überwiegend unbearbeitet verbleibt und nur die Streifen, in welche die Säschare eingreifen, bearbeitet werden. Dabei verbleiben zwischen den Saatreihen Bewuchsreste, welche eine Mulchschicht bilden können. Eine derartige Direktsaat wird in der Hauptsache wegen des damit verbundenen Erosionsschutzes angewandt, sie senkt jedoch auch die Bodenbearbeitungskosten und vermeidet unnötige Störungen der Bodenstruktur und der Bodenbiologie.

Um eine Säuberung der einzelnen Walzenelemente sicherzustellen, ist es möglich, eine Gummibereifung zu verwenden. Es ist jedoch auch, in Abhängigkeit von den jeweiligen Anwendungsbedingungen günstig, die Walzenelemente aus nicht rostendem Stahl, beispielsweise Nirostastahl herzustellen.

Im folgenden wird die Erfindung anhand von Ausführungsbeispielen in Verbindung mit den Zeichnungen beschrieben. Dabei zeigt:
- Fig. 1: eine schematische Seitenansicht des ersten Ausführungsbeispiels des erfindungsgemäßen Bodenbearbeitungsgeräts,
- Fig. 2: eine Draufsicht auf die Anordnung gemäß Fig. 1, wobei, die Dosier- und Sämaschine zum Zwecke der deutlicheren Darstellung weggelassen wurde,
- Fig. 3 und Fig. 4: Details verschiedener Ausführungsbeispiele der Walze,
- Fig. 5 bis Fig. 8: schematische Seitenansichten, ähnlich Fig. 1, weitere Ausführungsbeispiele des erfindungsgemäßen Bodenbearbeitungsgerätes,
- Fig. 9: eine Ausgestaltung eines erfindungsgemäßen Oberlenkers für das Kopplungsgestänge,
- Fig. 10: eine Detailansicht eines weiteren Ausführungsbeispiels der erfindungsgemäßen Walze,
- Fig. 11 und Fig. 12: weitere schematische Seitenansichten von Ausführungsbeispielen des Bodenbearbeitungsgerätes, ähnlich Fig. 1 und
- Fig. 13: eine weitere schematische Seitenansicht, ähnlich Fig. 1 eines weiteren Ausführungsbeispiels des Bodenbearbeitungsgeräts.

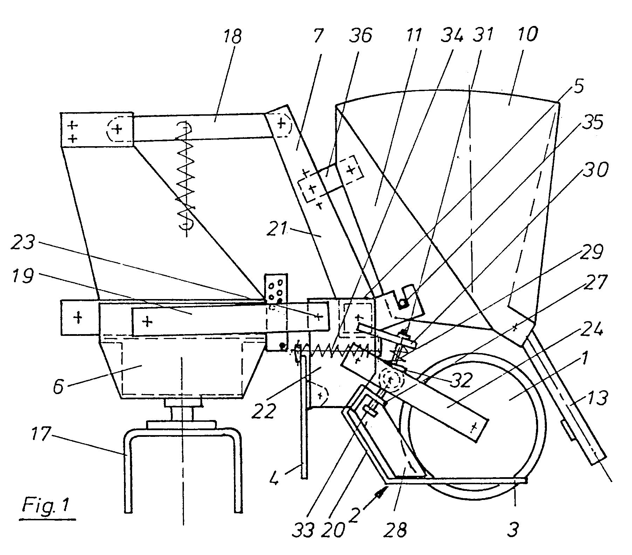

In Fig. 1 ist in schematischer Seitenansicht ein Ausführungsbeispiel des erfindungsgemäßen Bodenbearbeitungsgeräts dargestellt, welches mit einem mit Kreiselzinken 17, welche in üblicher Weise zapfwellenangetrieben sind, ausgerüsteten Vorgerät 6 verbunden ist. Das erfindungsgemäße Bodenbearbeitungsgerät umfaßt eine Walze 1, sowie ein vor der Walze angeordnetes Stützelement 2. Weiterhin ist eine Sämaschine 10 vorgesehen, welche mit Saatrohren 13 ausgerüstet ist, um Saatgut in den Boden einzubringen. Das Vorgerät 6 (Kreiselegge) stützt sich auf die Walze 1 ab, wobei die Kopplung über ein parallelogrammartiges Gelenkviereck erfolgt. Die Parallelogrammform ermöglicht es, daß die durch Walze 1, Stützelement 2 und Sämaschine 10 gebildete Gruppe bei einer Aufwärtsbewegung des Vorgeräts 6 keine Kippbewegung macht. Da das Dreipunktgestänge zwischen dem Schlepper und der Egge jedoch vielfach nicht in Form eines Parallelogramms ausgerichtet ist, muß das in Fig. 1 gezeigte Gestänge zwischen der Kreiselegge (Vorgerät 6) und der Walze 1 nicht unbedingt in Form eines Parallelogramms ausgebildet sein. Es ist deshalb ausreichend, wenn obere und untere Lenker 18, 19 so ausgerichtet sind, daß der von ihnen gebildete Pol annähernd mit dem aus dem Dreipunktgestänge gebildete Pol zusammenfällt.

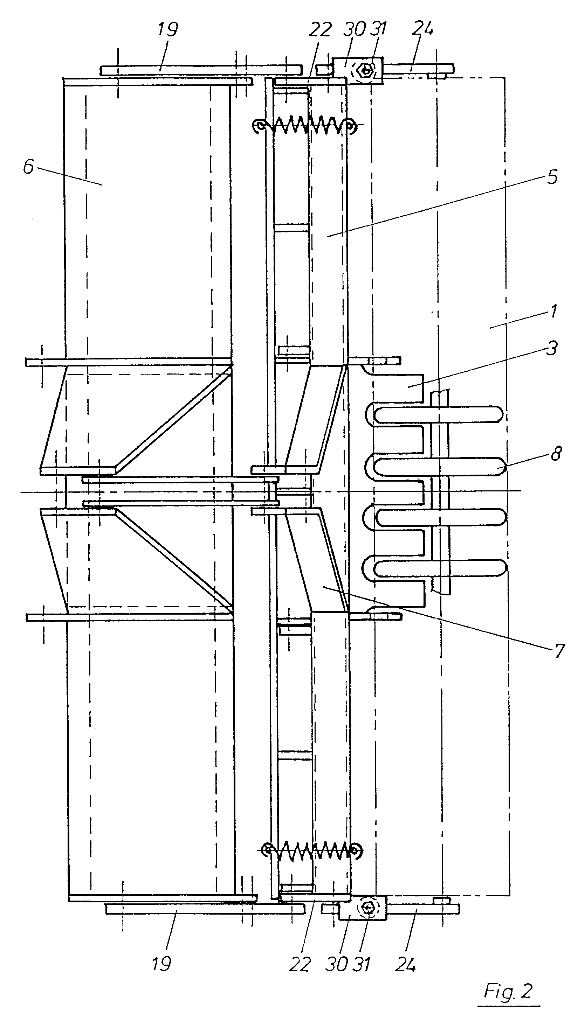

Vor der Walze 1 (in Fahrtrichtung gesehen) ist das Stützelement 2 so angebracht, daß dieses mit ebenfalls abstützenden Ansätzen 3 versehen sein kann, welche zwischen die einzelnen Räder der Walze (siehe Fig.2 ) eingreifen können, um auch als Abstreifer oder ähnliches zu dienen. Das Stützelement 2 ist im wesentlichen in Form einer horizontalen Platte ausgebildet, weist an seiner Vorderseite 20 jedoch eine Abschrägung auf, um das auftreffende Erdreich zu planieren.

Die Walze 1 und das Stützelement 2 weisen während der Arbeit des Bodenbearbeitungsgeräts normalerweise eine feste Position zueinander auf, um die Tiefe, mit welcher die Walze 1 in die Erdoberfläche drückt, genau einzustellen. Die Bodenrillen weisen somit jeweils einen gleichmäßig angedrückten Bodenzustand auf.

Der Oberlenker 18 und die Unterlenker 19 greifen bei dem gezeigten Ausführungsbeispiel an einer Koppel 21 eines Anschlußbocks 7 an. Weiterhin ist ein in Form eines Hohlprofils ausgebildeter Querbalken 5 vorgesehen, welcher sich über die gesamte Gerätebreite erstreckt. An den Enden des Querbalken 5 sind Endplatten 22 befestigt. Diese sind am Punkt 23 an den Lenkern 19 gelagert. Die Endplatten 22 sind somit an den Seiten des Gehäuses des Vorgeräts 6 gelagert. Alternativ dazu können die Lenker 18 und 19 jedoch auch ähnlich einem Dreipunktgestänge im mittleren Bereich des Vorgeräts 6 vorgesehen sein. Diese Ausgestaltungsform ist in den nachfolgenden Ausführungsbeispielen erläutert.

An den Endplatten 22 sind weiterhin Arme 24 angeordnet, wobei die Arme 24 Tragarme der durchgehenden Walze 1 bilden.

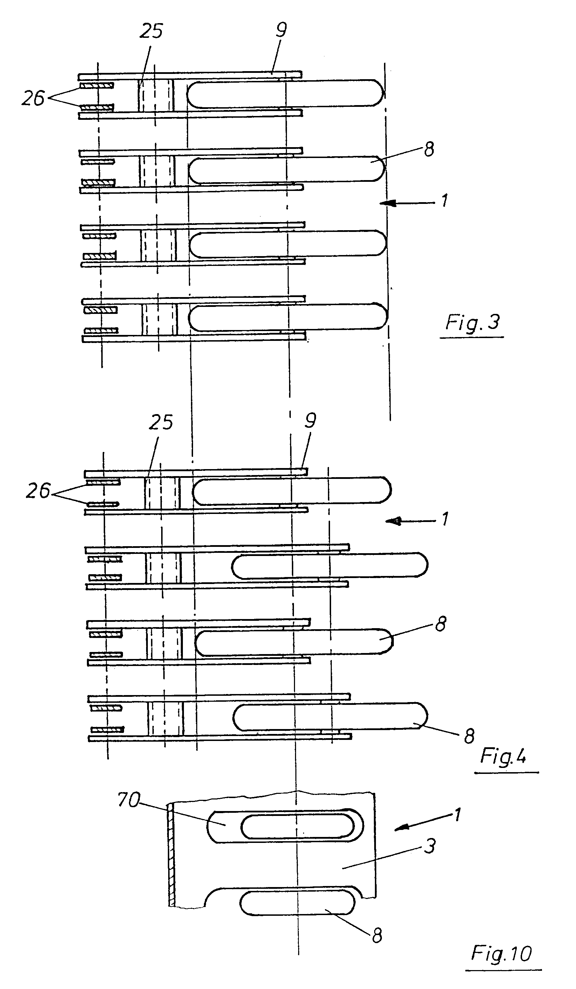

Wie in Fig. 3 dargestellt, ist die Walze 1 so ausgebildet daß einzelne Räder 8 jeweils an einem gabelartigen Lagerarm 9 gelagert sind, wobei die Lagerarme 9 über Rohrstücke 25 miteinander verbunden sind und über ein Laschenpaar 26, welches an der Unterseite des Querbalkens 5 befestigt ist, angebracht sind.

Um das Stützelement 2 fest mit dem Querbalken 5 bzw. der Koppel 21 zu verbinden, erstrecken sich die Endplatten 22 um einen gewissen Betrag nach unten. An der Unterseite der Endplatten 22 ist ein Winkelprofil 27 befestigt, weiterhin ist die Vorderseite 20 des Stützelements 2 so abgewinkelt, daß diese mit dem Winkelprofil 27 verbindbar ist. Zur weiteren Abstützung des Stützelements 2 dienen Stützen 28, welche ebenfalls an dem Winkelprofil 27 befestigt sind.

Erfindungsgemäß ist die Walze 1 so ausgebildet, daß die Räder 8 einzeln nach oben ausweichen können, wenn sie auf Widerstände, beispielsweise Steine auftreffen. Zu diesem Zwecke sind die Arme 24 auf Druckfedern 29 abgestützt, welche sich wiederum gegen Konsolen 30 abstützen. Weiterhin sind Schrauben 31 vorgesehen, welche mit großen Endscheiben 32 versehen sind und die Konsolen 30 durchgreifen. Es ist somit eine Einstellmöglichkeit geschaffen. Gegenüber der Abfederung sind Stellschrauben 33 angeordnet, mit welchen die Eindringtiefe der Räder 8 bzw. der Walze 1 einstellbar ist.

Zusätzlich zu der die Erde planierenden Vorderseite 20 des Stützelements 2 ist eine Planierplatte 4 vorgesehen, welche ebenfalls an den Endplatten 22 gelagert ist und mittels Zugfedern 34 elastisch gehalten ist.

Die erfindungsgemäße Geräteanordnung gestattet ein gleichmäßiges Andrücken der Erdoberfläche im Bereich der Saatreihe, so daß die nachfolgende Sämaschine 10 ein gezieltes Einbringen des Saatguts ermöglicht. Die Sämaschine 10 ist direkt mit der Koppel 21 bzw. dem Anschlußbock 7 verbunden, wobei Unterlenkerzapfen 35 in entsprechenden Gabeln eingreifen, welche am Querbalken 5 befestigt sind. Weiterhin ist ein Lenker 36 (Zwischenlenker) vorgesehen, welcher die Sämaschine 10 mit dem Anschlußbock 7 verbindet.

Es ist somit möglich, die Saatrohre 13 hinter den Rädern 8 der Walze 1 anzuordnen, wobei beispielsweise Säschare 12 direkt in die angedrückten Erdstreifen eingreifen können. Die angedrückten Streifen weisen dabei eine Breite von etwa 4 bis 8 cm auf. Es ist jedoch auch möglich, das Saatgut direkt aus den Saatrohren 13 in die Bodenrillen einzustreuen. In Abhängigkeit von der Ausgestaltung der Sämaschine ist es möglich, einzelne Saatreihen oder eine Bandsaat bei entsprechend breiten Rillen vorzusehen.

Bei der in Fig. 2 gezeigten Draufsicht des Ausführungsbeispiels gemäß Fig. 1 wird darauf verzichtet, die Sämaschine 10 abzubilden, um die übrige Konstruktion deutlich darstellen zu können. Es ist dabei, ähnlich wie bei den Ausführungsbeispielen der Fig. 3 und 4 ersichtlich, daß einzelne Räder 8 nebeneinander angeordnet sind, welche die Walze 1 bilden, wobei sich Ansätze 3 des Stützelements 2 in den Zwischenraum zwischen die Räder erstrecken können. Gemäß Fig. 4 sind die Räder versetzt angeordnet, um die Montage bzw. Demontage zu erleichtern.

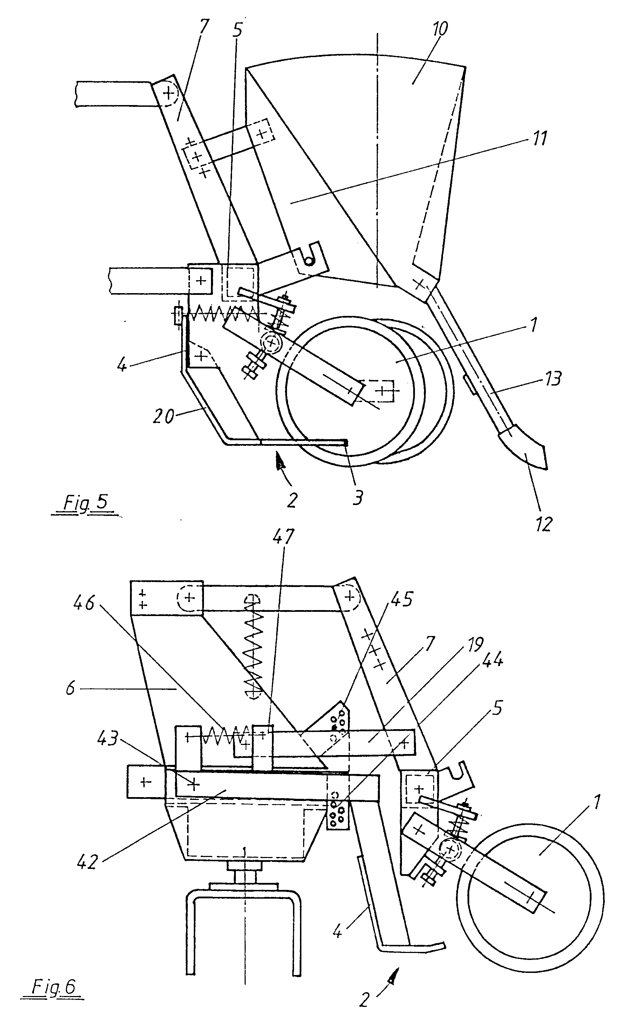

Die Fig. 5 zeigt ein weiteres Ausführungsbeispiel, ähnlich Fig. 1, bei welchem das Stützelement 2 an seiner Vorderseite 20 gelenkig und abgefedert angeordnet ist. Gemäß Fig. 5 sind die einzelnen Räder der Walze 1, wie in Fig. 4 gezeigt, zueinander versetzt. Auf die Planierplatte 4 wurde bei diesem Ausführungsbeispiel verzichtet bzw. ist sie durch die Vorderseite 20 ersetzt. Weiterhin ist anzumerken, daß der obere Abschnitt des Stützelements 2 gegen die Vorderseiten der Seitenplatten 22 angelegt und abgestützt ist.

Erfindungsgemäß kann die Eindringtiefe der Räder 8 am besten fixiert werden, wenn die Räder 8 und das Stützelement 2 gemeinsam an der Koppel bzw. dem Querbalken 5 angebracht und somit nahezu unabhängig von etwaigen Bewegungen des über ein Gelenkviereck gekoppelten Vorgeräts sind. Es ist jedoch auch möglich, das Stützelement direkt am Vorgerät anzubringen, wenn dieses durch die Walze 1 genau auf Tiefe geführt ist. Die Walze kann dann mittels einer Tiefeneinstellung entweder fest mit dem Vorgerät 6 verbunden sein. Es ist jedoch auch möglich, an dem Vorgerät Anschläge anzubringen, so daß dies nach oben ausweichen kann, wenn es auf Bodenhindernisse auftrifft.

Gemäß dem in Fig. 6 gezeigten Ausführungsbeispiel ist das Stützelement 2 einstückig mit einer Planierplatte 4 versehen, welche an einem Lager 43 mittels Armen 42 gelagert ist. Der Arm 42 liegt dabei gegen einen Bolzen 44 an, der zur Änderung der Höhenlage des Vorgeräts 6 umgesteckt werden kann. Weiterhin liegen die unteren Lenker 19 gegen Bolzen 45 an, um eine Änderung der Arbeitstiefe an zwei unterschiedlichen Stellen einstellen zu können. Durch eine Änderung der Stellung des Bolzens 45 ist es möglich, die Lage der Räder 8 relativ zu dem Stützelement 2 zu verändern, wodurch sich auch die Tiefe der Bodenrille ändert. Wenn die Vorderseite des Stützelements 2 gegen ein Hindernis trifft, kann der Arm 42 vom Anschlag 44 abheben. Die Arme 42 sind über Federn 46 gegenüber einer Konsole 47 abgefedert, welche mit der Seite des Gehäuses des Vorgerätes 6 verbunden ist.

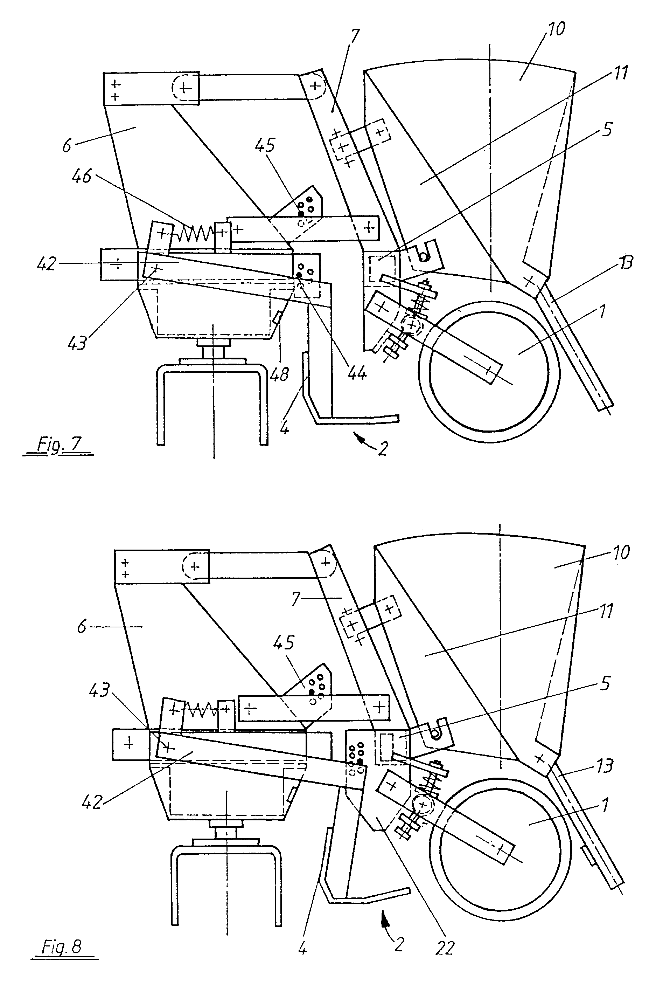

Das in Fig. 7 gezeigte Ausführungsbeispiel sieht vor, daß, ähnlich wie in Fig 7, die Arme 42 an den anderen Seiten der Anschläge 44 anliegen. Die Anordnung ist hier so getroffen, daß die Federn 46 das Anlegen des Vorgeräts 6 unterstützen, wenn dessen Werkzeuge auf Bodenhindernisse auftreffen. Bei einer Vertikalbewegung des Vorgeräts 6 können die Arme 42 von den Anschlägen 44 abheben, wobei die Federn 46 eine anhebende Kraft ausüben. Damit jedoch die Arme 42 bei einem Anheben der Gesamtmaschine mit dem Dreipunktkraftheber eines Schlepper nicht zu weit nach unten ausweichen, sind Anschläge 48 an den Seitenplatten 22 vorgesehen.

Bei den Ausführungsbeispielen gemäß den Fig. 6 und 7 ist es möglich, die Eindringtiefe der Walze 1 bzw. die Tiefe der Bodenrinnen und somit die Anpassung der Walze gegenüber dem Stützelement 2 mittels zweier Tiefeneinstellmöglichkeiten mit Hilfe der Bolzen 45 und 44 vorzunehmen.

In Fig. 8 ist ein weiteres Ausführungsbeispiel dargestellt, bei welchem die Arme 42 zwar am Drehpunkt 43 am Vorgerät 6 schwenkbar gelagert sind, das Stützelement 2 jedoch von den Endplatten 22 abgestützt wird. Die Platten 22 sind zu diesem Zweck mit einer Reihe von Bohrungen versehen, um eine Einstellung der Bolzen 44 und 45 zu ermöglichen.

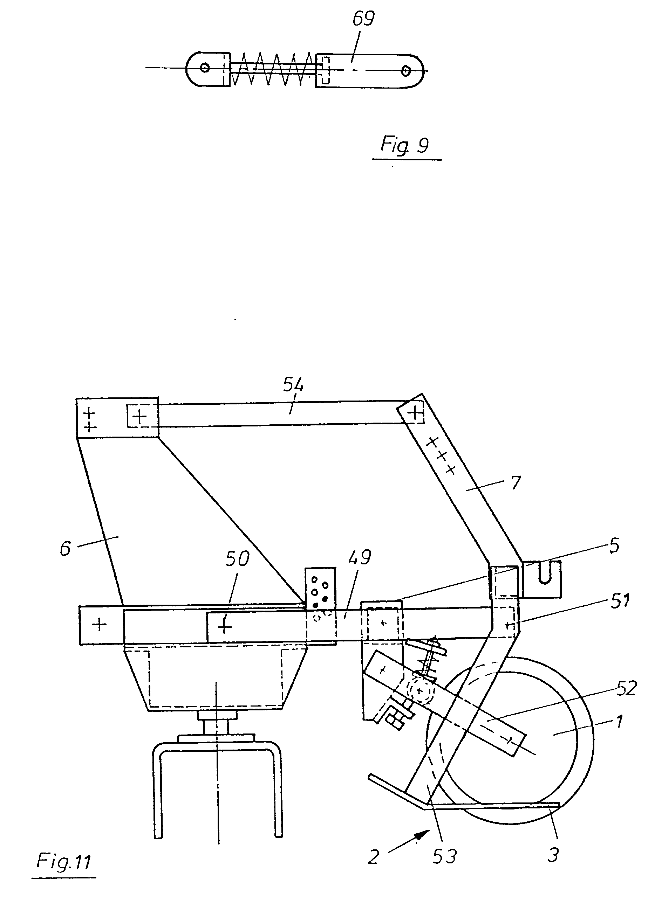

In der Fig. 11 ist ein weiteres Ausführungsbeispiel des erfindungsgemäßen Bodenbearbeitungsgeräts dargestellt. Dabei ist die Walze mittels Tragarmen am Vorgerät 6 schwenkbar angeordnet, während das Stützelement 2 an einer hinteren Koppel angeordnet ist, wobei die Teile derartig zueinander angeordnet sind, daß bei einer Höhenverstellung oder einer Höhenbewegung der Vorgeräts 6 die Eindringtiefe der Räder 8 der Walze 1 gegenüber dem Stützelement 2 konstant bleibt. Die unteren Tragarme 49 gleichzeitig untere Lenker des Koppelgestänges. Die Tragarme 49 sind sind durch den Querbalken 5 starr miteinander verbunden. Die Walze 1 ist an dem Querbalken 5 angeordnet, ähnlich wie bei dem Ausführungsbeispiel gemäß Fig. 6. Die Walze ist gegenüber dem Querbalken 5 höheneinstellbar, so daß sich eine Höheneinstellbarkeit des Stützelements 2 erübrigt. Dieses ist fest mit der Koppel bzw. dem Anschlußbock 7 verbunden. Die unteren Tragarme 49 sind an den Stellen 50 und 51 gelagert, so daß bei einer Verstellung des Vorgerätes 6 die unteren Tragarme 49 und mit ihr die Walze 1 eine Schwenkung um den Lagerpunkt 50 vollführen. Dabei bewegt sich die Koppel 7 parallel zum Vorgerät 6, wobei die Achse der Walze 1 eine kleine Schwenkbewegung um den Lagerpunkt 51 ausführt. Es ändert sich somit der Abstand zwischen der Achse der Walze 1 und dem Lagerpunkt 51 nicht.

Der Querbalken 5 erstreckt sich bei diesem Ausführungsbeispiel über die gesamte Breite des Bodenbearbeitungsgeräts, wobei die Tragarme 49 außen an dem Vorgerät 6 sowie an den Querbalken 5 angeordnet sind und bis zu dem Gelenkpunkt 51 verlängert sind. Die äußeren Arme 52, an welchen die Walze 1 gelagert ist, befinden sich ungefähr unter den Lenkern 49. Weiterhin sind Arme 53 vorgesehen, welche sich außerhalb der Arme 49 und 52 befinden. An den Armen 53 ist das Stützelement 2 gelagert. Zusätzlich ist weiterhin ein Oberlenker 54 vorgesehen, welcher sich ungefähr in der Mitte des Bodenbearbeitungsgeräts befindet.

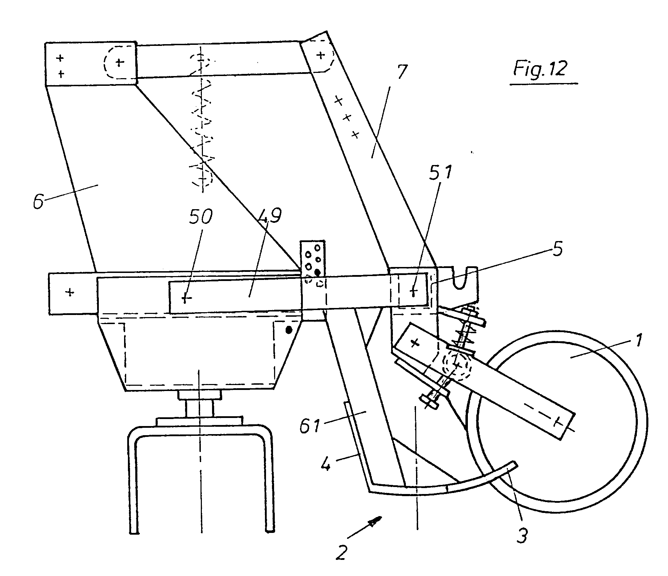

In Abwandlung deß in Fig. 11 gezeigten Ausführungsbeispiels ist es jedoch auch möglich, die Walze nicht mit den Unterlenkern des Koppelgestänges bzw. des Anschlußbocks 7 zu verbinden, sondern das Stützelement 2 fest mit den Unterlenkern zu verbinden. Der Vorteil ergibt sich dadurch, daß die Unterlenker vor dem Anschlußbock 7 angeordnet sind, und das Stützelement sich somit vor der Walze 1 befindet. Dabei wird der Abstützpunkt des Stützelements 2 auf dem Erdboden senkrecht unter dem Anlenkpunkt der Unterlenker an dem Anschlußbock 7 plaziert, so daß sich bei einer Tiefenverstellung nur horizontale Bewegungen des Stützelements 2 ergeben. Dargestellt ist das in der Fig. 12.

Das Ausführungsbeispiel gemäß Fig. 12 umfaßt eine Lagerung und Abstützung der Walze 1 an dem Querbalken 5. Das Stützelement 2 ist über Stützen 61 fest mit den Lenkern oder unteren Tragarmen 49 verbunden. Hierbei ist es weiterhin möglich, daß Stützelement 2 gegenüber den Tragarmen 49 einstellbar zu machen, um beispielsweise einen Verschleiß der Werkzeuge des Vorgeräts 6 ausgleichen zu können. Zusätzlich wäre es möglich, daß Stützelement 2 ähnlich wie in Fig. 6 abzufedern.

Bei dem in Fig. 12 gezeigten Ausführungsbeispiel ist die Bodenfläche des Stützelement gewölbt, da bei einer Verstellung eine Verschwenkung um den Lagerpunkt 51 erfolgt. Es wird somit eine exakte Tiefe der durch das Stützelement 2 bzw. die Walze 1 erzeugten Bodenrinne eingehalten.

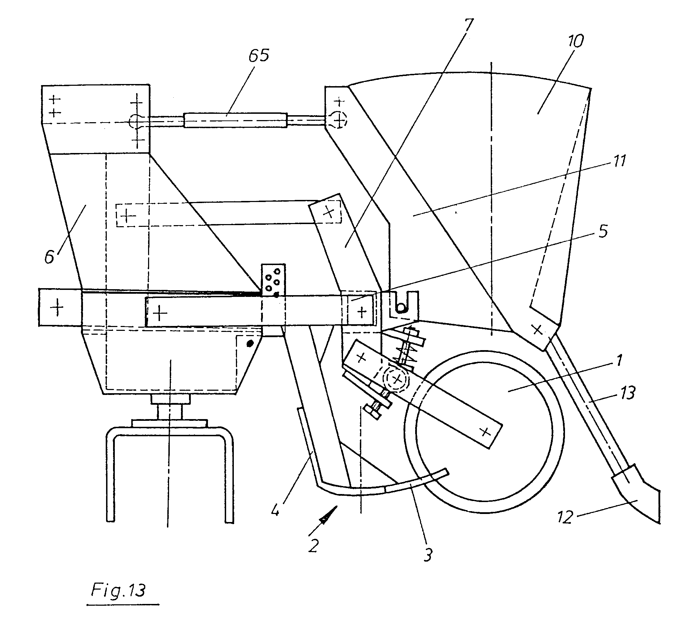

Das Ausführungsbeispiel gemäß Fig. 13 zeigt eine Variante des in Fig. 12 beschriebenen Ausführungsbeispiels. Die Sämaschine 10 kann dabei mit einem eigenen Oberlenker 65 an das Vorgerät 6 angeschlossen werden. Der Oberlenker 64 ist dabei parallel zu den Lenkern des hinteren Koppelgestänges angeordnet. Dadurch wird ermöglicht, daß mehr Platz für die Sämaschine 10 zur Verfügung steht.

In Fig. 9 ist ein vorgespannter abgefederter Oberlenker 69 dargestellt, welcher beispielsweise als Oberlenker bei dem Ausführungsbeispiel gemäß Fig. 13 verwendbar ist. Es ist somit möglich, mittels eines einzigen abgefederten Oberlenkers 69 das Kufenelement 14 insgesamt abgefedert zu lagern. Weiterhin ist der in Fig. 9 gezeigte Oberlenker auch bei den Ausführungsbeispielen 7 und 9 einsetzbar, wobei er die dort gezeigte Abfederung der Walze 1 oder des Stützelements 2 ersetzen kann.

Die Fig. 10 zeigt ein weiteres Ausführungsbeispiel des Stützelements bzw. der Ansätze 3, welche mit länglichen Ausnehmungen 17 versehen sind, durch welche die Räder 8 durchgreifen können. Somit dienen die Ansätze 3 als Abstreifer, welche das Profil des Rades auch an dessen Rückseite umgreifen. Um zu verhindern, daß mitgenommene Bewuchsreste oder Erdbrocken oberhalb der Ansätze 3 angesammelt werden, ist die in Fig. 13 gezeigte Ausnehmung 70 geringfügig größer, als die jeweilige projizierte Fläche des Rades.

Es ist somit möglich, bei den einzeln aufgehängten Rädern 8 der Walze 1 in einfacher Weise Reparaturen durchzuführen. Die Räder 8 können in Form von Schlappreifen ausgebildet sein, welche bei einer Beschädigung auf besonders einfache Weise gewechselt werden können.

Die Walze ist bevorzugterweise so ausgestaltet, daß das walkende, elastisch verformbare Profil der Räder 8 eine Verschmutzung der Walze 1 verhindert.

In einer Weiterentwicklung der Walze ist es weiterhin möglich, mittels einer zentralen Druckverstellungseinrichtung die abgefederte Walze 1 bzw. die einzeln aufgehängten Räder 8 zu verstellen, etwa dadurch, daß die Konsolen 30 der Federabstützung gemeinsam gegenüber dem Querbalken 5 verschwenkbar ausgebildet sind. Hinter dem Querbalken 5 kann somit eine schwenkbare Welle vorgesehen sein, an welcher die Konsolen 30 angebracht sind.

Weiterhin ist es möglich, einzelne Räder 8 der Walze 1 mit dem zugehörigen Abschnitt des Stützelements 2 jeweils als ein Aggregat auszuführen, so daß die Reihenabstände verändert werden können. Derartige Aggregate können als Aggregate für eine Einzelkornsaat ausgebildet sein, welche auf einen größeren Abstand gesetzt werden können als für eine Getreidesaat.

Die Erfindung ist nicht auf die gezeigten Ausführungsbeispiele beschränkt, vielmehr ergeben sich im Rahmen der Ansprüche für den Fachmann vielfältige Abwandlungs- und Modifikationsmöglichkeiten.

## Patentansprüche

1. Bodenbearbeitungsgerät mit einer Walze (1), welche am Umfang mehrere vorstehende, voneinander beabstandete Ringelemente (8) aufweist, wobei die Walze (1) einzelne, solche Ringelemente (8) bildende Räder oder Scheiben umfaßt und die Räder oder Scheiben mittels separater Lagerarme (9) einzeln oder in Gruppen höhenbeweglich gelagert und einzeln gefedert sind,
dadurch gekennzeichnet, daß
die Räder oder Scheiben mittels zumindest eines vorgespannten Federelementes (29) gegen einen verstellbaren Anschlag (33) gedrückt werden, wobei das Federelement (29) so beschaffen ist, daß es eine Verschwenkung der Räder oder Scheiben gegeneinander und gegen seine Federkraft nur dann zuläßt, wenn diese auf Bodenhindernisse wie Steine oder dergleichen auftreffen.

2. Bodenbearbeitungsgerät nach Anspruch 1, dadurch gekennzeichnet, daß die Räder (8) oder Scheiben in Fahrtrichtung zueinander versetzt angeordnet sind.

3. Bodenbearbeitungsgerät nach einem der Ansprüche 1 oder 2, dadurch gekennzeichnet, daß das Federelement (29) einstellbar ausgebildet ist.

4. Bodenbearbeitungsgerät nach einem der Ansprüche 1 bis 3, dadurch gekennzeichnet, daß die Räder (8) elastisch verformbar ausgebildet sind.

5. Bodenbearbeitungsgerät nach einem der Ansprüche 1 bis 4, dadurch gekennzeichnet, daß in Bewegungsrichtung vor der Walze (1) ein sich im wesentlichen über die gesamte Breite der Walze (1) erstreckendes, die Eindringtiefe der Ringelemente (8) der Walze (1) begrenzendes Planier-bzw. Stützelement (4;2) angeordnet ist.

6. Bodenbearbeitungsgerät nach einem der Ansprüche 1 bis 5, dadurch gekennzeichnet, daß die Walze (1) mit einem zapfwellenbetriebenen Bodenbearbeitungsgerät betriebsverbunden ist.

7. Bodenbearbeitungsgerät nach Anspruch 6, dadurch gekennzeichnet, daß dem Bodenbearbeitungsgerät eine Sämaschine (10) nachgeordnet ist.

8. Bodenbearbeitungsgerät nach einem der Ansprüche 1 bis 7, dadurch gekennzeichnet, daß die Räder oder Scheiben an einem gemeinsamen Tragkörper gelagert sind.

9. Bodenbearbeitungsgerät nach Anspruch 8, dadurch gekennzeichnet, daß die Sämaschine (10) mittels eines Dreipunkt-Anbaubocks (11) an dem Bodenbearbeitungsgerät ankoppelbar ist.

10. Bodenbearbeitungsgerät nach einem der Ansprüche 7 bis 9, dadurch gekennzeichnet, daß die Sämaschine (10) auf der Achse der Walze (1) abgestützt ist.

11. Bodenbearbeitungsgerät nach einem der Ansprüche 1 bis 9, dadurch gekennzeichnet, daß der Anschlag (33) verstellbar ausgebildet ist.

## Claims

1. A soil tilling implement with a roller (1) which has on its circumference a plurality of projecting annular elements (8) spaced apart from one another, the roller (1) comprising individual wheels or discs forming annular elements (8) of this type and - by means of separate bearing arms (9) - the wheels or discs being mounted individually or in groups in a manner so as to be vertically-movable and being individually sprung, characterised in that the wheels or discs are pressed towards an adjustable stop (33) by means of at least one prestressed spring element (29), the spring element (29) being such that it only permits pivoting of the wheels or discs in relation to one another and against its spring action when these wheels or discs hit obstructions in the soil such as stones or the like.

2. A soil tilling implement in accordance with Claim 1, characterised in that the wheels (8) or discs are offset in relation to one another in the direction of travel.

3. A soil tilling implement in accordance with either one of Claims 1 or 2, characterised in that the spring element (29) is constructed so as to be adjustable.

4. A soil tilling implement in accordance with any one of Claims 1 to 3, characterised in that the wheels (8) are constructed to be resiliently deformable.

5. A soil tilling implement in accordance with any one of Claims 1 to 4, characterised in that a levelling and support element (4 and 2 respectively) is arranged in front of the roller (1) in the direction of motion, extends over substantially the entire width of the roller (1) and limits the depth of penetration of the annular elements (8) of the roller (1).

6. A soil tilling implement in accordance with any one of Claims 1 to 5, characterised in that the roller (1) is operationally connected to soil tilling apparatus driven by a power takeoff shaft.

7. A soil tiling implement in accordance with Claim 6, characterised in that a sowing machine (10) is arranged behind the soil tilling implement.

8. A soil tilling implement in accordance with any one of Claims 1 to 7, characterised in that the wheels or discs are mounted on a common bearing body.

9. A soil tiling implement in accordance with Claim 8, characterised in that the sowing machine (10) can be coupled to the soil tilling implement by means of a triangulated mounting support (11).

10. A soil tilling implement in accordance with any one of Claims 7 to 9, characterised in that the sowing machine (10) is supported on the axle of the roller (1).

11. A soil tilling implement in accordance with any one of Claims 1 to 9, characterised in that the stop (33) is designed to be adjustable.

## Revendications

1. Machine pour le travail du sol, comportant un rouleau (1) qui présente, sur sa périphérie, plusieurs éléments annulaires (8) en saillie, placés à une certaine distance les uns des autres, étant entendu que le rouleau (1) comporte des roues, ou disques, séparés formant ces différents éléments annulaires (8) que ces roues, ou disques, sont montées avec possibilité de se déplacer en hauteur, individuellement ou par groupes, au moyen de bras supports (9) séparés. et que ces roues, ou disques, sont montées individuellement de façon élastique,
caractérisée en ce que
les roues, ou disques, sont poussées contre une butée réglable (33) au moyen d'au moins un organe formant ressort (29) précontraint, cet organe étant conçu de façon à permettre un pivotement des roues, ou disques, les unes par rapport aux autres et en s'opposant à sa force de ressort, seulement quand ces roues, ou disques, rencontrent des obstacles situés dans le sol, comme des pierres ou similaires.

2. Machine pour le travail du sol suivant la revendication 1, caractérisée en ce que les roues (8), ou les disques, sont disposées décalées les unes par rapport aux autres dans la direction du déplacement.

3. Machine pour le travail du sol suivant la revendication 1 ou la revendication 2, caractérisée en ce que l'organe formant ressort (29) est réalisé réglable.

4. Machine pour le travail du sol suivant l'une quelconque des revendications 1 à 3, caractérisée en ce que les roues (8) sont réalisées de façon à pouvoir se déformer élastiquement.

5. Machine pour le travail du sol suivant l'une quelconque des revendications 1 à 4, caractérisée en ce qu'avant le rouleau (1), dans le sens du déplacement, est disposé un organe de nivellement et d'appui (4, 2), s'étendant essentiellement sur toute la largeur du rouleau (1) et limitant la profondeur de pénétration des éléments annulaires (8) du rouleau (1).

6. Machine pour le travail du sol suivant l'une quelconque des revendications 1 à 5, caractérisée en ce que le rouleau (1) est associé fonctionnellement avec une machine à travailler le sol, entraînée par une prise de force.

7. Machine pour le travail du sol suivant la revendication 6, caractérisée en ce qu'après la machine à travailler le sol, est placé un semoir (10).

8. Machine pour le travail du sol suivant l'une quelconque des revendications 1 à 7, caractérisée en ce que les roues, ou disques, sont montées sur un organe porteur commun.

9. Machine pour le travail du sol suivant la revendication 8, caractérisée en ce qu'un semoir (10) peut être accouplé à la machine à travailler le sol au moyen d'un attelage à trois points (11).

10. Machine pour le travail du sol suivant l'une quelconque des revendications 7 à 9, caractérisée en ce qu'un semoir (10) prend appui sur l'axe du rouleau (1).

11. Machine pour le travail du sol suivant l'une quelconque des revendications 1 à 9, caractérisée en ce que la butée (33) est réalisée réglable.
